# EUROPEAN PATENT SPECIFICATION

(11) **EP 1 973 116 B1**
(45) Date of publication and mention of the grant of the patent: **08.05.2019**
(21) Application number: 08004984.4
(22) Date of filing: 17.03.2008
(51) Int. Cl.: H04N 21/23, H04N 21/21, H04N 21/43, H04N 21/44, H04N 21/47, H04N 21/65, H04N 21/45, H04L 29/06

(54) **Method for reproducing media content in terminal and terminal having function for reproducing media content**
Verfahren zur Wiedergabe von Medieninhalten in einem Endgerät und Endgerät mit der Funktion zur Wiedergabe von Medieninhalt
Procédé de reproduction de contenu de média dans un terminal et terminal disposant d'une fonction de reproduction de contenu média

(30) Priority: 19.03.2007 KR 20070026620
(43) Date of publication of application: 24.09.2008
(73) Proprietor: LG Electronics Inc., Yeongdeungpo-gu Seoul 150-721 (KR)
(72) Inventor: Jeon, Soo Jin, Kumchon-gu Seoul 153-801 (KR)
(74) Representative: Katérle, Axel

(56) References cited:
- EP-A2- 1 120 716
- WO-A-03/081446
- WO-A-2006/010950
- US-A1- 2002 041 692
- US-A1- 2006 059 535

## Description

### BACKGROUND OF THE INVENTION

### Field of the Invention

The present invention relates to a method for reproducing media content in a terminal, and more particularly, to a method for reproducing media content when accessing a content-providing server, and a terminal having a function for reproducing media content.

### Discussion of the Related Art

In general, when a terminal accesses a specific content-providing server, the terminal outputs audio signal provided by the specific content-providing server.

At this time, the terminal may stop the output of the audio signal and reproduce a media content, which is previously stored in the terminal, according to the selection of a user.

However, in the terminal, an additional operation of the user is required for reproducing the media content which is previously stored in the terminal, when the terminal accesses the content-providing server.

Thus, when the terminal accesses the content-providing server and reproduces the media content previously stored in the terminal, the media content specified by the user is sequentially reproduced regardless of what content-providing server is accessed. WO03081446 is directed to an apparatus and method of providing a multimedia advertising service through a mobile communication network. A content server downloads add contents to a mobile terminal along with a content-displaying condition and the mobile terminal having received the add contents displays the received add contents according to the content-displaying condition when an event specified by the content-displaying condition occurs. Afterwards, a content-displayed history is uploaded to the content server by the mobile terminal.

WO2006010950 discuses that music tracks are received over wireless digital radio and stored in encrypted form in a digital media player, but only when the player is receiving and playing back advertisements is it possibly to playback stored, encrypted tracks. A user could therefore build up a large library of music tracks over time, stored on the player, knowing that he could listen to any so long as he was prepared also to listen to advertisements.

EP 1 120 716 discloses a method and apparatus for associating an auditory cue with a navigational aid for use in navigating the Internet. At least one element of a history or bookmark list, regardless of the structural representation of that list, of a browser is associated with a sound. In particular, "sound bytes" are stored in wave files on a storage medium of a computer running the browser. At least one element, for example, a web page name, of the history list is associated with one of the stored wave files. The associated sound is played when the web page is accessed and may be heard again when passing a cursor over the name in a history mechanism, or re-accessing the web page.

US 2006/059535 discloses a receiver, such as in an automobile and/or wireless communication device, that is configured for a method of playing live and recorded multimedia content. A desired genre of content is first defined. Both recorded and live content of that desired genre is identified and assembled into a playlist. Live content that is near a beginning of its being played can be rotated to a top of the playlist.

### SUMMARY OF THE INVENTION

Accordingly, the present invention is directed to a method for reproducing media content in a terminal and a terminal having a function for reproducing media content that substantially obviate at least one problem due to limitations and disadvantages of the related art.

An object of the present invention is to provide a method and terminal, as set out in the independent claims, reproducing media content desired by a user among at least one media content which is previously stored in the terminal, according to what a content server is accessed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof, as well as the appended drawings.

To achieve these objects and other advantages and in accordance with the purpose of the invention, as embodied and broadly described herein, a method for reproducing media content in a terminal includes accessing a content server; and reproducing at least one media content configured with the accessed content server, among at least one media content which is previously stored in the terminal.

In another aspect of the present invention, there is provided a terminal having a media content reproduction function, comprising: a storage unit configured to store at least one media content; a transmission/reception unit configured to access a content server and receive at least one content from the accessed content server; and a controller configured to reproduce at least one media content configured with the accessed content server, among the at least one media content stored in the storage unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram showing a terminal having a function for reproducing media content according to an embodiment of the present invention;
FIG. 2 is a structural diagram showing a system including a content server and a terminal according to an embodiment of the present invention;
FIG. 3 is a flowchart illustrating a method for reproducing media content in a terminal according to an embodiment of the present invention;
FIGs. 4A and 4B are state diagram showing a process of setting media content according to content server and a process of setting a content server according to media content according to the present invention;
FIGs. 4C and 4D is state diagram showing a process of reproducing and controlling media content configured with a accessed content server according to the present invention;
FIG. 5 is a flowchart illustrating a method for outputting audio data of media content configured with a content server according to an embodiment of the present invention;
FIG. 6 is a flowchart illustrating a method for reproducing media content when accessing a plurality of content servers according to an embodiment of the present invention;
FIG. 7A is a state diagram showing a process of reproducing media content when accessing a plurality of content servers according to a first embodiment of the present invention;
FIG. 7B is a state diagram showing a process of reproducing media content when accessing a plurality of content servers according to a second embodiment of the present invention;
FIG. 7C is a state diagram showing a process of reproducing media content when accessing a plurality of content servers according to a third embodiment of the present invention; and
FIG. 8 is a flowchart illustrating a process of reproducing media content if an accessed content server is changed from one content server to another content server according to an embodiment of the present invention.

### DETAILED DESCRIPTION OF THE INVENTION

Reference will now be made in detail to the preferred embodiments of the present invention, examples of which are illustrated in the accompanying drawings. If it is determined that the detailed description of a related known function or construction renders the scope of the present invention unnecessarily ambiguous, the detailed description thereof will be omitted.

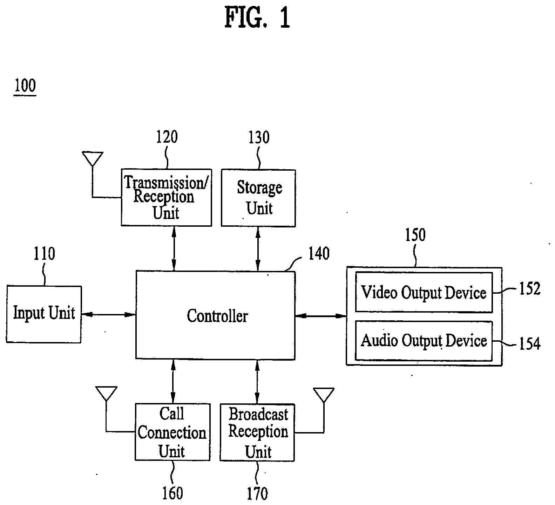

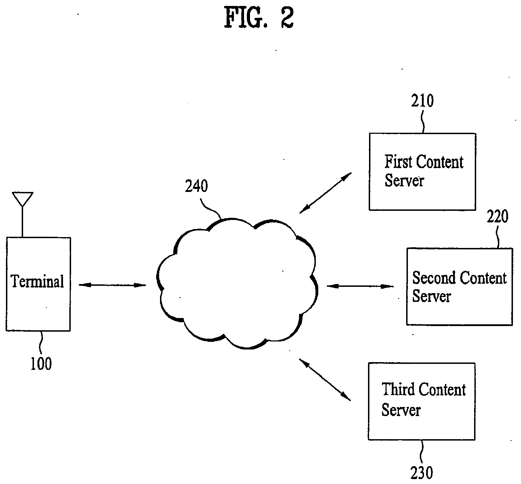

A terminal having a function for reproducing media content according to an embodiment of the present invention will be described in detail with reference to FIGs. 1 and 2. FIG. 1 is a block diagram showing a terminal having a function for reproducing media content according to an embodiment of the present invention, and FIG. 2 is a structural diagram showing a system including a content server and a terminal according to an embodiment of the present invention.

As shown in FIG. 1, the terminal 100 includes an input unit 110, a transmission/reception unit 120, a storage unit 130, a controller 140, an output unit 150, a call connection unit 160, and a broadcast reception unit 170.

The input unit 110 receives an input operation (or input command) from a user of the terminal 100 and generates a signal corresponding thereto.

The input unit 110 is configured to receive the input operation of the user, and may include a key pad provided with a plurality of keys, a touch screen, or a touch pad. In particular, the input unit 110 includes a control key configured to receive a control command (or input command) from the user for a reproduction (or playing) of a media content (e.g., video, audio, and text) while the media content is being reproduced or played. Here, the media content being reproduced is configured or pre-set in the terminal 100 so that if the user makes a selection via the control key, the media content is reproduced. Moreover, the media content being reproduced is received from the accessed content-providing server (hereinafter referred to as a "content server").

The transmission/reception unit 120 is configured to access the content server 210 (e.g., generally provided externally) through a communication network 240, and receive contents from the content server 210. Furthermore, the transmission/reception unit 120 may access a plurality of content servers 210, 220 and 230.

In particular, the communication network 240 can be in a form of a wireless Internet. At the same time, the communication network 240 can be implemented by at least one of Wireless Broadband (WiBro), Worldwide Interoperability for Microwave Access (WiMAX), Wireless Fidelity (WiFi), and High Speed Donwlink Packet Access (HSDPA). Furthermore, the communication network 240 can also include a wired Internet and be implemented by, without being limited to, all methods for receiving contents from an external server.

The content servers 210, 220 and 230 can be connected to the terminal 100 over the communication network 240 to provide contents (e.g., audio, video, and text) to the terminal 100.

For example, the content servers 210, 220 and 230 can include a variety of Internet servers such as a web server, a File Transfer Protocol (FTP) server, and a mail server. The content servers 210, 220 and 230 can have respective address information for indicating their locations on the network. The address information may be represented by a uniform resource locator (URL).

Accordingly, the transmission/reception unit 120 can access the content server 210 using the address information, and more particularly, the URL of the content server 210. The transmission/reception unit 120 can use the address information directly inputted by the user through the input unit 110 and the address information stored in the storage unit 130.

The contents indicate a web page (including an highest-level web page and a lower-level web page). The web page includes a HTML file relating to script and graphic.

If the content server 210 is accessed, the highest-level web page or the lower-level web page of the content server 210 can be outputted by the output unit 150.

The storage unit 130 can store all data inputted/outputted to/from the terminal 100 and all programs necessary for the operation of the terminal 100. For example, the storage unit 130 can store the contents provided by the content server 210 accessed through the transmission/reception unit 120, and can store the address information of the previously accessed content servers.

In addition, the storage unit 130 can store various forms of media. The media (or media content) includes an audio including sound and music, a video including still image and moving image, and a video/audio including multimedia. The media can also be referred to as data related to audio, video, and text. Moreover, the media can be stored in the storage unit 130 as a default, or can be received from an external terminal or server and stored in the storage unit 130.

The controller 140 can control the whole operation of the terminal 100. In particular, the controller 140 can be configured to perform an operation for reproducing media when accessing the content server 210 through the transmission/reception unit 120.

First, the controller 140 can configure (or set) a specific media to be reproduced when the terminal accesses a specific content server. Here, the configured specific media is one of many media contents (e.g., audio, video, text, still images, and flash) stored in the storage unit 130.

For example, the controller 140 can configure at least one media content per at least one content server or conversely, can configure at least one content server per at least one media content, according to the selection of the user through the input unit 110. In other words, media content can be configured to more than one content server and/or a content server can be configured to more than one media content.

Accordingly, if a specific content server is accessed by the terminal 100, the controller 140 can reproduce the at least one media content configured with the accessed specific content server.

If an audio signal (e.g., audio of the media contents) configured on the terminal 100 with the content server 210 collides with another audio signal, it is the function of the controller 140 to control the operation for reproducing (or playing/outputting) the audio.

For example, if audio signal(or, audio) provided by the accessed content server 210 is present, the controller 140 can provide control command(s) so that one of the provided audio signal or audio signal of the media content configured on the accessed server 210 is outputted.

If the content server 210 is accessed while media (e.g., audio, video, and text) stored in the storage unit 130 is reproduced, the controller 140 can control one of the audio stored in the storage unit 130 and the audio of the media content configured with the accessed content server 210 to be outputted.

If an audio signal according to a call connection by the call connection unit 160 is present, the controller 140 can control one of the audio according to the call connection and the audio of the media content configured with the accessed content server 210 to be outputted.

If a broadcast program is received through the broadcast reception unit 170, the controller 140 can control one of audio signal of the broadcast program and audio signal of the media content configured with the accessed content server 210 to be outputted.

The output unit 150 can be configured to output various forms of media (or signals) according to the control signal of the controller 140. The output unit 150 includes a video output device 152 for outputting the video and an audio output device 154 for outputting the audio.

More specifically, the output unit 150 can output audio or video of the media configured with the content server 210 accessed through the transmission/reception unit 120 according to the control signal of the controller 140.

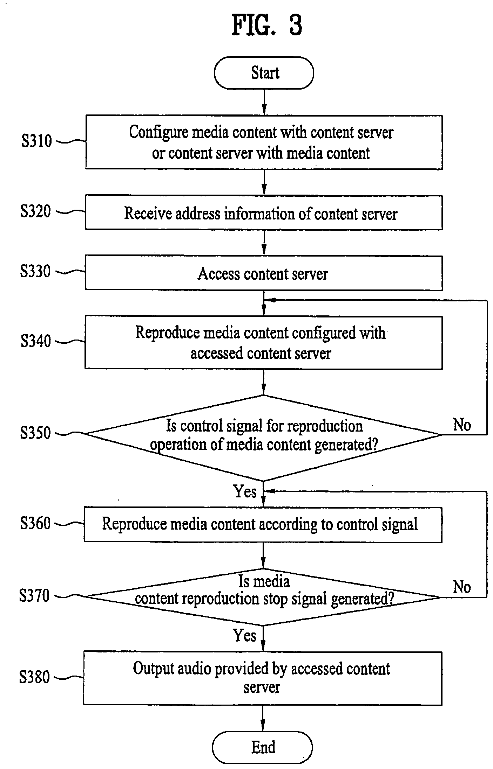

A media content reproduction method of a terminal according to an embodiment of the present invention will now be described with reference to FIG. 3. FIG. 3 is a flowchart illustrating a method for reproducing media in a terminal according to an embodiment of the present invention.

The terminal 100 can configure (or set) at least one media according to at least one content server, or at least one content server according to at least one media content (S310).

The content server with which the media contents will be configured may be selected by the user, previously configured in the terminal 100, or previously connected to the terminal 100. The media contents can relate to media contents which are previously stored in the terminal 100, and as discussed, the media contents can include data (or files) associated with audio, video, and video/audio, among other contents.

In the setting (or configuring) step S310, the terminal 100 can set at least one of a reproduction sequence, a reproduction frequency, a reproduction speed, and a reproduction time of at least one media content configured with a specific server, according to the selection of the user.

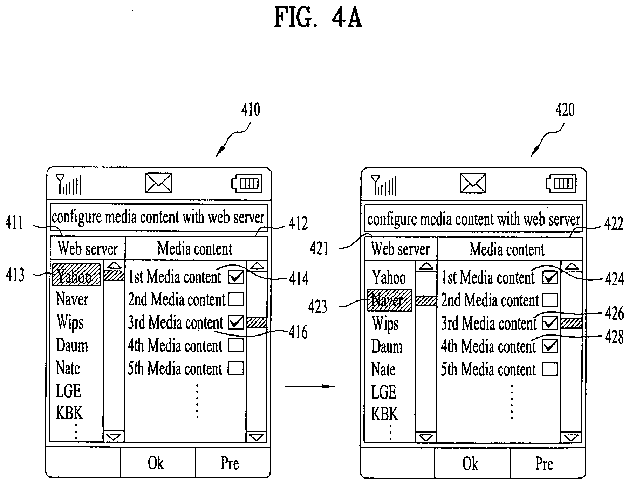

Hereinafter, a process of setting (or configuring) media with the content server according to the present invention will be described in detail with reference to FIG. 4A. Hereinafter, the content server can also be referred to as a "web server."

As shown in FIG. 4A, when a mode for configuring (or setting) a media content with the web server is selected by the user, the terminal 100 displays a list of web servers in first regions 411 and 421 of a screen and a list of media contents in second regions 412 and 422.

For example, the terminal 100 configures first media content 414 and third media content 416 with a web server 'Yahoo' 413 according to the selection of the user (410) .

The terminal 100 configures first media content 424, third media content 426, and fourth media content 428 with a web server 'Naver' 423 according to the selection of the user (420).

The terminal 100 can configure at least one media content with each web server by the above-described manner.

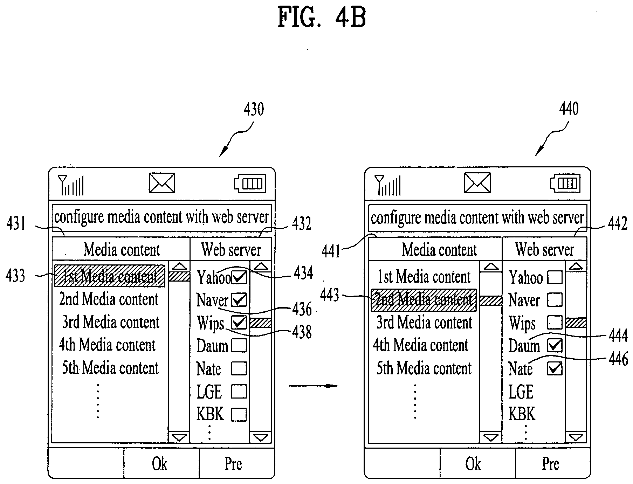

Hereinafter, a process of configuring web server with media content(s) will be described in detail with reference to FIG. 4B.

As shown in FIG. 4B, if a mode for configuring the web server with media content is selected by the user, the terminal 100 displays a list of media contents in first regions 431 and 441 of a screen and a list of web servers in second regions 432 and 442. For example, the terminal 100 can configure web servers 'Yahoo' 434, 'Naver' 436 and 'Wips' 438 with first media content 433 according to the selection of the user (430).

The terminal 100 can configure web servers 'Daum' 444 and 'Nate' 446 with second media content 443 according to the selection of the user (440). Moreover, the terminal 100 can configure at least one web server with each media content by the above-described manner. In addition, the terminal 100 can receive the address information of a content server (for example, web server) to be accessed (S320).

The web servers have respective address information (for example, URLs). Accordingly, the terminal 100 can directly receive the address information of the content server from the user, or receive the address information allowing the user to select the content server having the address information which is previously stored in the terminal 100.

The terminal 100 accesses the content server having the received address information (S330). The terminal 100 can output a web page provided by the accessed content server on the screen.

The terminal 100 reproduces at least one media content configured with the accessed content server (S340). In particular, the terminal 100 can reproduce at least one media content according to the reproduction frequency, the reproduction speed, and the reproduction time of the at least one media content configured in the setting step S310.

The terminal 100 can display brief information on a media content which is currently being reproduced (for example, the name of the media content) in a predetermined region, and more particularly, a lower end region of the screen.

The terminal 100 can determine whether a control signal for the reproduction operation of the media content is generated (S350). More specifically, the terminal 100 can generate the control signal for the reproduction operation if the control key is selected by the user.

For example, if the control key is selected, the terminal 100 can display a list of media contents configured on the accessed content server, information on the media content which is currently being reproduced (for example, a title, a signer's name, a composer/lyricist's name, the lyrics of song, and album information when the media content is a "music file") and a control window for controlling a reproduction method (for example, a window for controlling a reproduction speed, a reproduction frequency, a reproduction time, a reproduced section, a reproduction volume and a reproduction sequence).

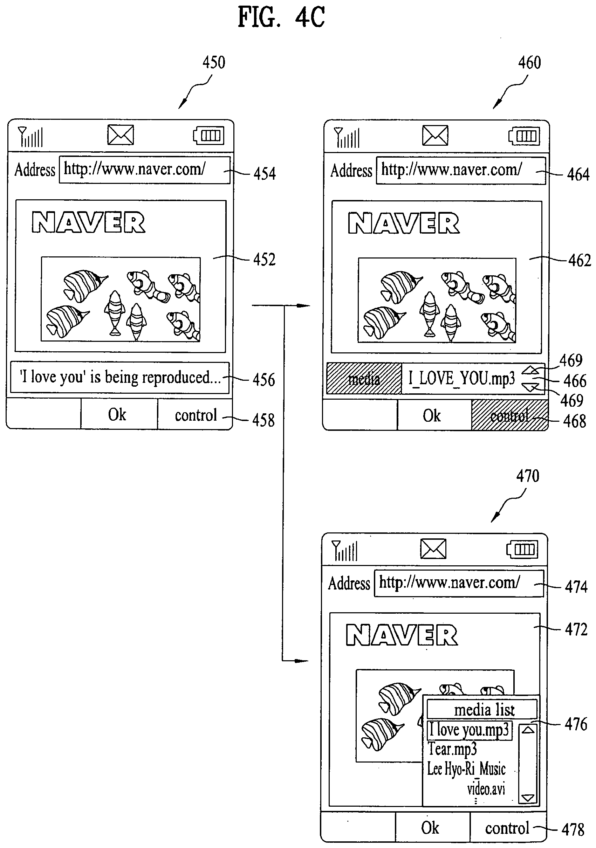

Hereinafter, a process of displaying a list of media contents configured with the content server according to the present invention will be in detail described with reference to FIG. 4C.

First, as denoted by a reference numeral 450, if the web server 'Naver' is accessed, the terminal 100 displays the URL of a web server 'Naver' on an address window 454 and the web page of the web server 'Naver' on a main screen 452. The terminal 100 displays the control key 458 on a portion of the lower end region of the screen, and displays information 456 that 'I love you', which is the media content configured with the web server 'Naver', is currently being reproduced.

When the control key 458 is activated, the terminal 100 displays a search window 466 for displaying search pointers 469 in a portion of the lower end region of the screen so as to search for the 'I love you' which is currently being produced and other media content configured with the web server 'Naver' (460). Accordingly, the user can search for desired media content by activating the search pointers 469.

When the control key 458 is activated, the terminal 100 displays the list 476 of media contents configured with the web server 'Naver' in a partial region of the screen (470). Accordingly, the user can search for desired media content using the list 476 of media contents.

The terminal 100 can reproduce the searched media content in the states 460 and 470 according to the selection of the user.

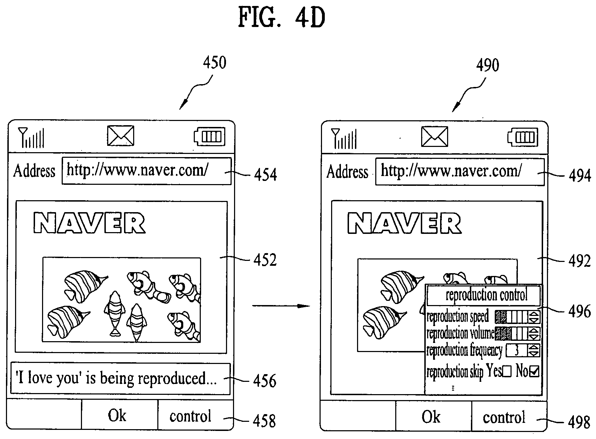

Hereinafter, a process of controlling a reproduction method of media content configured with the web server when accessing the web server according to the present invention will be described in detail with reference to FIG. 4D.

In the state 450, when the control key 458 is activated, the terminal 100 displays the control window 496 on a partial region of the screen (490).

On the control window 496, items for determining the reproduction speed, the reproduction volume, the reproduction frequency, and the reproduction skip are displayed.

If it is determined that the control signal is generated, the terminal 100 reproduces at least one media content according to the control signal (S360).

For example, the terminal 100 may delete/skip specific media content (e.g., audio or video) from the list of media contents or add specific media content to the list of media contents. Alternatively, the terminal 100 may stop the reproduction of the media content which is currently being reproduced and reproduce specific media content selected from the list of media contents. Alternatively, the terminal 100 may reproduce at least one media content according to a reproduction method configured through the control window.

The terminal 100 determines whether a reproduction stop signal for the media content which is currently being reproduced is generated (S370).

The reproduction stop signal may be generated according to the selection of the user. Alternatively, the reproduction stop signal may be generated if all the media contents configured with the accessed web server is reproduced.

If it is determined that the reproduction stop signal is generated, the terminal 100 stops the reproduction operation of the media content configured with the accessed web server and outputs the audio signal provided by the accessed content server (S380).

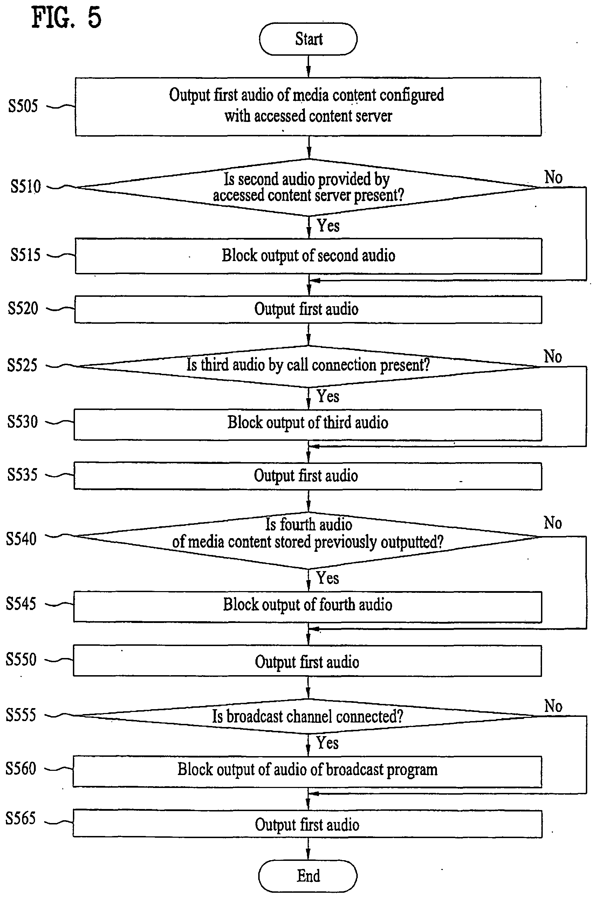

A method for outputting audio signal (or audio) of the media contents configured with a content server according to an embodiment of the present invention will now be described in detail with reference to FIG. 5. In particular, FIG. 5 shows the method for outputting audio, when other audio signal collides with the audio of media contents configured with the content server (or web server).

Hereinafter, it is assumed that the media content configured with the web server comprises audio. It is assumed that, when the other audio signal collides with the audio of the media content configured with the web server, the audio of the media content configured with the web server is outputted in preference to the other audio signal. Alternatively, the other audio signal may be outputted in preference to the audio of the media content configured with the web server.

The terminal 100 can output audio (hereinafter, referred to as a "first audio") of the media content configured with the accessed content server (or web server) (S505).

The terminal 100 determines whether audio (hereinafter, referred to as a "second audio") provided by the accessed content server is present (S510).

If it is determined that the second audio is present, the terminal 100 blocks the output of the second audio (S515) and continuously outputs the first audio (S520).

The terminal 100 determines whether audio according to call connection (hereinafter, referred to as a "third audio") is present (S525).

If it is determined that the third audio is present, the terminal 100 blocks the output of the third audio (S530) and continuously outputs the first audio (S535).

The terminal 100 determines whether the content server is accessed while audio (hereinafter, referred to as a "fourth audio") media content which is previously stored in the terminal 100 is reproduced (S540).

If it is determined that the fourth audio is reproduced, the terminal 100 blocks the output of the fourth audio (S545) and continuously outputs the first audio (S550).

Further, the terminal 100 determines whether the terminal 100 is connected to a broadcast channel (S555). If it is determined that the terminal 100 is connected to the broadcast channel, the terminal 100 blocks the output of audio of a broadcast program provided through the broadcast channel (S560) and continuously outputs the first audio (S565).

Meanwhile, the terminal 100 may stop only the output of the audio of the broadcast program while the video of the broadcast program is outputted on the screen.

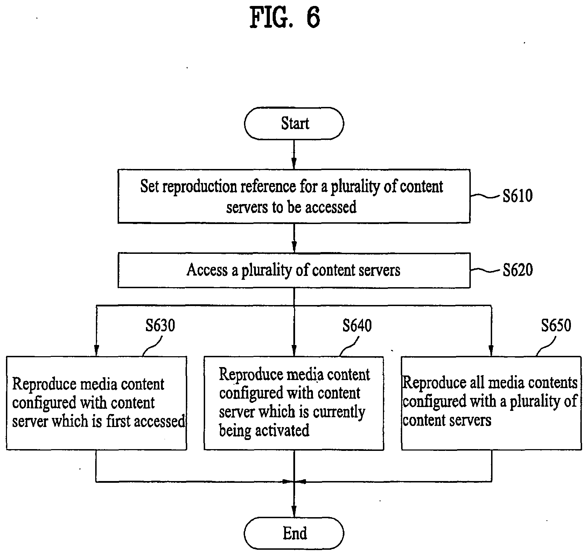

A method for reproducing media content when accessing a plurality of content servers according to an embodiment of the present invention will now be described in detail with reference to FIG. 6.

The terminal 100 can configure (or set) a reproduction reference of media content when accessing the plurality of content servers (S610).

The reproduction reference indicates a reference for determining the reproduction sequence of media content configured with the plurality of content servers when accessing the plurality of content server. The reproduction reference may be configured according to the selection of the user or as a default.

The terminal 100 accesses the plurality of content servers (S620). The terminal 100 continuously reproduces at least one media content configured with the content server which is first accessed (S630).

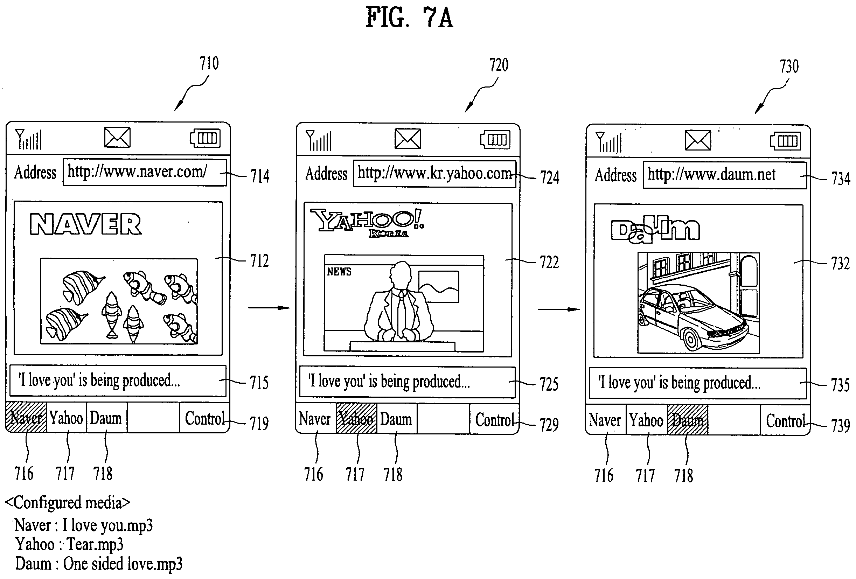

Hereinafter, it is assumed that 'I_love_you.mp3' is configured with a web server 'Naver', 'tear.mp3' is configured with a web server 'Yahoo', and 'one-sided_love.mp3' is configured with a web server 'Daum' in FIGs 7A to 7C.

As shown in FIG. 7A, the terminal 100 continuously reproduces the 'I_love_you.mp3' configured with the web server 'Naver' which is first accessed, regardless of what content server is activated among the plurality of accessed content servers (710, 720 and 730).

Alternatively, the terminal 100 reproduces at least one media content configured with the content server which is currently being activated (S640).

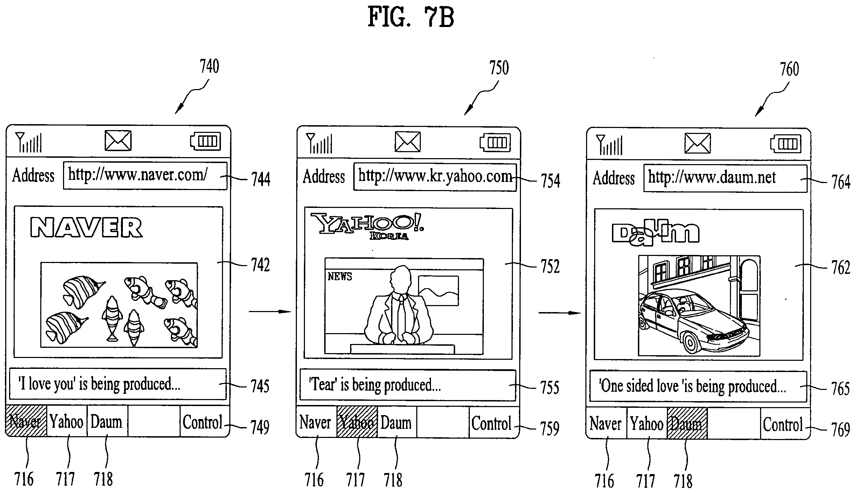

As shown in FIG. 7B, the terminal 100 reproduces the 'I_love_you.mp3' (740) if the web server 'Naver' is activated, the 'tear.mp3' (750) if the web server 'Yahoo' is activated, and the One-sided_love.mp3' if the web server 'Daum' is activated.

Alternatively, the terminal 100 reproduces all the media contents configured with the plurality of content servers (S650). For example, the terminal 100 may reproduce all the media contents configured with the plurality of content servers in order in which the servers were accessed.

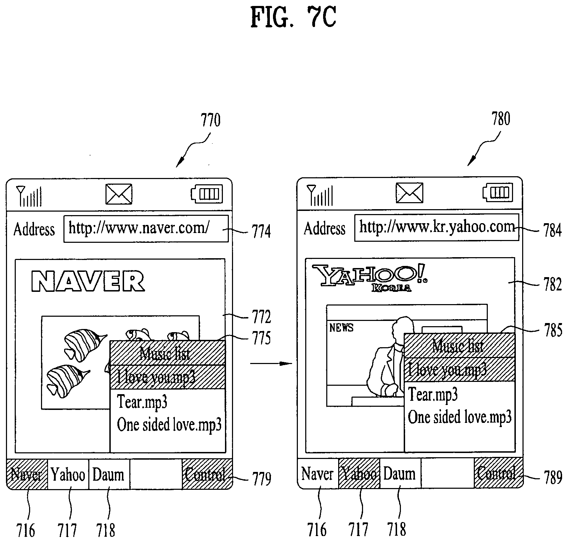

As shown in FIG. 7C, the terminal 100 reproduces all the media contents configured with the plurality of accessed content servers, regardless of what content server is activated among the plurality of accessed content servers.

Accordingly, all the media contents configured with the plurality of content servers is displayed as a list of music 775 or 785 (770 and 780).

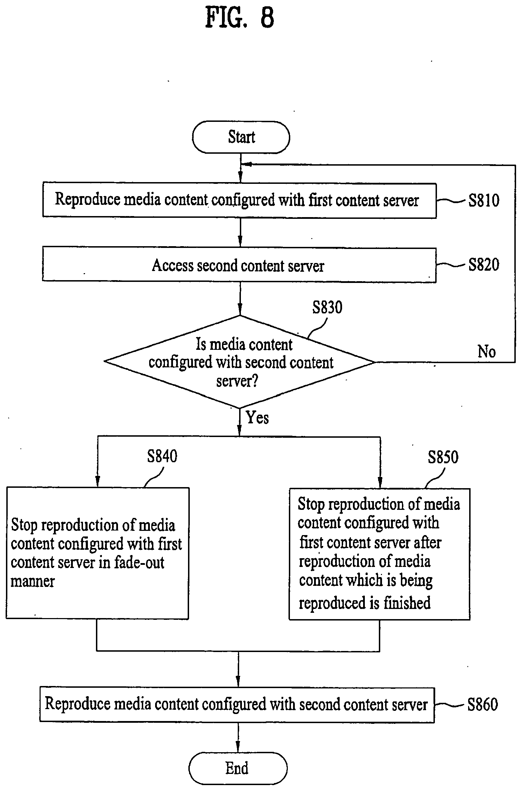

A method for reproducing media content if the accessed content server is changed from one content server (hereinafter, referred to as a "first content server") to another content server (hereinafter, referred to as a "second content server") will now be described in detail with reference to FIG. 8.

The terminal 100 accesses the second content server (S820) while the media content configured with the first content server is reproduced (S810).

The terminal 100 determines whether media content is configured with the second content server (S830). If it is determined that the media content is configured with the second content server, the terminal 100 stops the reproduction of the media content configured with the first content server in a fade-out manner (S840).

Alternatively, if it is determined that the media content is configured with the second content server, the terminal 100 stops the reproduction of the media content configured with the first content server after the reproduction of the media content, which is being reproduced in the reproducing step (S810), is finished (S850).

The terminal 100 reproduces the media content configured with the second content server (S860).

In contrast, if it is determined that the media content is not configured with the second content server, the terminal 100 returns to the step S810, which the media content configured with the first content server is then continuously reproduced.

In a method for reproducing media content in a terminal and a terminal having a function for reproducing media content according to the present invention, the following effects are obtained.

First, it is possible to access a web server and, at the same time, to reproduce media content previously stored in the terminal.

Second, since media content to be reproduced can be configured with each web server, it is possible to access a web server and, at the same time, to reproduce media content configured with the accessed web server without a user's operation. Accordingly, a user can receive contents from a web server and, at the same time, reproduce desired media content.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A method for reproducing media content in a terminal (100), the method performed by the terminal and comprising the steps of:
storing a plurality of media contents in the terminal (100);
assigning the stored plurality of media contents to be associated with a plurality of content servers (413);
accessing a first content server of the plurality of content servers (413);
displaying, via a touch screen of the terminal, a first web page associated with the first content server;
assigning a first media content associated with the first content server in a list displayed on the touch screen of the terminal;
reproducing, in response to accessing the first content server, the first media content associated with the first content sever assigned to the list;
accessing a second content server of the plurality of content servers;
displaying, via the touch screen, a second web page associated with the second content server while reproducing the first media content in the list;
assigning a second media content associated with the second content server in the list displayed on the touch screen of the terminal;
reproducing the second media content in the list after the completion of reproducing the first media content while displaying the second web page associated with the second content server; and
if a broadcast channel is connected to the terminal (100) over a broadcast network, stopping an output of audio of a broadcast program provided through the broadcast channel and outputting video of the broadcast program while the first or second media content is continuously reproduced,
wherein the first and second media contents comprise audio.

2. The method according to claim 1, wherein the terminal (100) in the assigning step sets at least one of a reproduction sequence, a reproduction frequency, a reproduction speed and a reproduction time of the at least one media content (414) associated with the content server (413).

3. The method according to claim 1 or 2, wherein, if audio provided by the accessed content server (413) is present, the terminal (100) in the assigning step configures one of the provided audio and audio of the at least one media content (414) associated with the accessed content server (413) to be outputted.

4. The method according to claim 1 or 2, wherein, if a call is connected to the terminal (100), the terminal (100) in the assigning step configures one of audio by the call connection and audio of the at least one media content (414) associated with the accessed content server (413) to be outputted.

5. The method according to claim 1 or 2, wherein if the at least one content server (413) is accessed while a media content (414) stored in the terminal (100) is reproduced, the terminal (100) in the assigning step configures one of audio of the reproduced media content and audio of the at least one media content (414) associated with the accessed content server (413) to be outputted.

6. The method according to any of claims 1-5, wherein the terminal (100) in the reproducing step reproduces the at least one media content (414) associated with the content server (413) which is currently being activated, if a plurality of content servers (413) is accessed.

7. The method according to any of claims 1-5, wherein the reproducing step comprises:
stopping the reproduction of a media content (414) associated with a first content server (413), if the accessed content server (413) is changed from the first content server to a second content server; and
reproducing the at least one media content (414) associated with the second content server.

8. The method according to any of claims 1-7, further comprising:
controlling a reproduction operation of the at least one media content (414) associated with the accessed content server (413),
wherein the terminal (100) in the reproducing step reproduces the at least one media content (414) associated with the accessed content server (413) according to the control result.

9. The method according to any of claims 1-8, further comprising:
blocking output of other media content while the at least one media content (414) associated with the accessed content server (413) is reproduced.

10. A terminal (100) having a media content reproduction function, the terminal (100) comprising:
a touch screen;
a storage unit (130) configured to store a plurality of media contents; a transmission/reception unit (120) configured to access one of at least one content server (413) and to receive at least one content from the at least one accessed content server; and
a controller configured to:
assign the plurality of media contents stored in the storage unit to be associated with the plurality of content severs (413),
in response to accessing a first content server of the plurality of content servers (413), control the touch screen to display a first web page associated with the first content server in a list and reproduce a first media content associated with the first content server in the list,
if the transmission/reception unit accesses a second content server of the plurality of content servers (413) while reproducing the first media content, control the touch screen to display a second web page associated with the second content server in the list, continue to reproduce the first media content while displaying the second web page associated with the second content server in the list, and reproduce a second media content associated with the second content server after completing the reproducing of the first media content in the list, and
if a broadcast channel is connected to the terminal (100) over a broadcast network, stop an output of audio of a broadcast program provided through the broadcast channel and output video of the broadcast program, while the first or second media content is continuously reproduced,
wherein the first and second media contents comprise audio.

11. The terminal (100) according to claim 10, wherein the media content (414) comprises data associated with at least one of audio and video.

12. The terminal (100) according to claims 10 or 11, wherein the transmission/reception unit (120) is configured to access the content server (413) using address information of the content server (413).

13. The terminal (100) according to claims 10-12, wherein the controller (140) is configured to set at least one of a reproduction sequence, a reproduction frequency, a reproduction speed and a reproduction time of at least one media content (e.g., 414) associated with the content server (413).

14. The terminal (100) according to any of claims 10-13, wherein the controller (140), when a plurality of content servers (413) is accessed, is configured to:
reproduce the at least one media content (414) associated with the content server (413) which is first accessed,
reproduce the at least one media content (414) associated with the content server (413) which is currently being activated, or
reproduce all media contents (414) associated with the plurality of content servers (413) in order of access.

15. The terminal according to any of claims 10-13, wherein the controller (140), when the accessed content server (413) is changed from a first content server to a second content server through the transmission/reception unit (120), is configured to stop the reproduction of the at least one media content (414) associated with the first content server, and to reproduce the at least one media content (414) associated with the second content server.

16. The terminal according to any of claims 10-13, wherein the controller (140) is configured to continuously reproduce the at least one media content (414) associated with a first content server, if the accessed content server (413) is changed from the first content server to a second content server with which media content is not associated.

17. The terminal according to any of claims 10-16, further comprising:
an input unit (110) configured to receive a selection signal of a reproduction manner of the at least one media content (414) associated with the accessed content server (413),
wherein the controller (140) is configured to control a reproduction operation of the at least one media content (414) associated with the accessed content server (413) according to the selection signal.

18. The terminal according to any of claims 10-17, wherein the controller (140), when audio provided by the accessed content server (413) is present, is configured to control one of the provided audio and audio of the at least one media content (414) associated with the accessed content server (413) to be outputted.

19. The terminal according to any of claims 10-17, wherein the controller (140), when a call is connected to the terminal (100), is configured to control one of audio by the call connection and audio of the at least one media content (414) associated with the accessed content server (413) to be outputted.

20. The terminal according to any of claims 10-17, wherein the controller (140), if the content server (413) is accessed while the media content (414) associated in the storage unit (130) is reproduced, is configured to control one of audio of the reproduced media content (414) and audio of the at least one media content (414) associated with the accessed content server (413) to be outputted.

21. The terminal according to any of claims 10-20, wherein the controller (140) is configured to block output of other media content while the at least one media content (414) associated with the accessed content server (413) is reproduced.

## Patentansprüche

1. Verfahren zur Wiedergabe von Medieninhalten in einem Endgerät (100), wobei das Verfahren von dem Endgerät ausgeführt wird und die Schritte umfasst:
Speichern einer Mehrzahl von Medieninhalten in dem Endgerät (100);
Zuweisen der gespeicherten Mehrzahl von Medieninhalten, die einer Mehrzahl von Inhaltsservern (413) zugeordnet werden sollen;
Zugreifen auf einen ersten Inhaltsserver aus der Mehrzahl von Inhaltsservern (413);
Anzeigen einer ersten Webseite, die dem ersten Inhaltsserver zugeordnet ist, über einen Berührungsbildschirm des Endgeräts;
Zuweisen eines ersten Medieninhalts, der dem ersten Inhaltsserver zugeordnet ist, in einer Liste, die auf dem Berührungsbildschirm des Endgeräts angezeigt wird;
Wiedergeben des ersten Medieninhalts, der dem ersten Inhaltsserver zugeordnet ist und der Liste zugewiesen ist, als Reaktion auf den Zugriff auf den ersten Inhaltsserver;
Zugreifen auf einen zweiten Inhaltsserver aus der Mehrzahl von Inhaltsservern;
Anzeigen einer zweiten Webseite, die dem zweiten Inhältsserver zugeordnet ist, über den Berührungsbildschirm, während der erste Medieninhalt in der Liste wiedergegeben wird;
Zuweisen eines zweiten Medieninhalts, der dem zweiten Inhaltsserver zugeordnet ist, in der Liste, die auf dem Berührungsbildschirm des Endgeräts angezeigt wird;
Wiedergeben des zweiten Medieninhalts in der Liste nach dem Abschluss der Wiedergabe des ersten Medieninhalts, während die zweite Webseite, die dem zweiten Inhaltsserver zugeordnet ist, angezeigt wird; und
wenn ein Rundfunkkanal über ein Rundfunknetz mit dem Endgerät (100) verbunden ist, Stoppen einer Ausgabe von einem Audio eines über den Rundfunkkanal bereitgestellten Rundfunkprogramms und Ausgeben eines Videos des Rundfunkprogramms, während der erste oder zweite Medieninhalt fortlaufend wiedergegeben wird,
wobei der erste und der zweite Medieninhalt Audio umfassen.

2. Verfahren nach Anspruch 1, wobei das Endgerät (100) in dem Zuweisungsschritt mindestens eine von einer Wiedergabesequenz, einer Wiedergabefrequenz, einer Wiedergabegeschwindigkeit und einer Wiedergabedauer des mindestens einen Medieninhalts (414), der dem Inhaltsserver (413) zugeordnet ist, festlegt.

3. Verfahren nach Anspruch 1 oder 2, wobei, wenn ein Audio, das von dem Inhaltsserver (413), auf den zugegriffen wird, bereitgestellt wird, vorhanden ist, das Endgerät (100) in dem Zuweisungsschritt eines von dem bereitgestellten Audio und einem Audio des mindestens einen auszugebenen Medieninhalts (414), der dem Inhaltsserver (413), auf den zugegriffen wird, zugeordnet ist, konfiguriert.

4. Verfahren nach Anspruch 1 oder 2, wobei, wenn ein Anruf mit dem Endgerät (100) verbunden ist, das Endgerät (100) in dem Zuweisungsschritt eines von einem Audio durch die Anrufverbindung und einem Audio des mindestens einen auszugebenen Medieninhalts (414), der dem Inhaltsserver (413), auf den zugegriffen wird, zugeordnet ist, konfiguriert.

5. Verfahren nach Anspruch 1 oder 2, wobei, wenn auf den mindestens einen Inhaltsserver (413) zugegriffen wird, während ein Medieninhalt (414), der in dem Endgerät (100) gespeichert ist, wiedergegeben wird, das Endgerät (100) im Zuweisungsschritt eines von einem Audio des wiedergegebenen Medieninhalts und einem Audio des mindestens einen auszugebenen Medieninhalts (414), der dem Inhaltsserver (413), auf den zugegriffen wird, zugeordnet ist, konfiguriert.

6. Verfahren nach einem der Ansprüche 1 bis 5, wobei das Endgerät (100) im Wiedergabeschritt den mindestens einen Medieninhalt (414) wiedergibt, der dem Inhaltsserver (413) zugeordnet ist, der gerade aktiviert wird, wenn auf eine Mehrzahl von Inhaltsservern (413) zugegriffen wird.

7. Verfahren nach einem der Ansprüche 1 bis 5, wobei der Wiedergabeschritt umfasst:
Stoppen der Wiedergabe eines Medieninhalts (414), der einem ersten Inhaltsserver (413) zugeordnet ist, wenn der zugegriffene Inhaltsserver (413) vom ersten Inhaltsserver zu einem zweiten Inhaltsserver geändert wird; und
Wiedergeben des mindestens einen Medieninhalts (414), der dem zweiten Inhaltsserver zugeordnet ist.

8. Verfahren nach einem der Ansprüche 1 bis 7, ferner umfassend:
Steuern eines Wiedergabevorgangs des mindestens einen Medieninhalts (414), der dem Inhaltsserver (413), auf den zugegriffen wird, zugeordnet ist,
wobei das Endgerät (100) in dem Wiedergabeschritt den mindestens einen Medieninhalt (414) wiedergibt, der dem Inhaltsserver (413), auf den zugegriffen wird, zugeordnet ist, gemäß dem Steuerergebnis.

9. Verfahren nach einem der Ansprüche 1 bis 8, ferner umfassend:
Blockieren einer Ausgabe von anderen Medieninhalten, während der mindestens eine Medieninhalt (414), der dem Inhaltsserver (413), auf den zugegriffen wird, zugeordnet ist, wiedergegeben wird.

10. Endgerät (100) mit einer Medieninhaltswiedergabefunktion, wobei das Endgerät (100) umfasst:
einen Berührungsbildschirm;
eine Speichereinheit (130), die zum Speichern einer Mehrzahl von Medieninhalten eingerichtet ist;
eine Sende/Empfangseinheit (120), die eingerichtet ist, um auf einen von mindestens einem Inhaltsserver (413) zuzugreifen und mindestens einen Inhalt von dem mindestens einen Inhaltsserver, auf den zugegriffen wird, zu empfangen; und
eine Steuerung, die eingerichtet ist zum:
Zuweisen der Mehrzahl von Medieninhalten, die in der Speichereinheit gespeichert sind, die der Mehrzahl von Inhaltsservern (413) zugeordnet werden sollen,
als Reaktion auf den Zugriff auf einen ersten Inhaltsserver aus der Mehrzahl von Inhaltsservern (413), Steuern des Berührungsbildschirms, um eine erste Webseite, die dem ersten Inhaltsserver zugeordnet ist, in einer Liste anzuzeigen und einen ersten Medieninhalt, der dem ersten Inhaltsserver zugeordnet ist, in der Liste wiederzugeben,
wenn die Sende/Empfangseinheit während der Wiedergabe des ersten Medieninhalts auf einen zweiten Inhaltsserver aus der Mehrzahl von Inhaltsservern (413) zugreift, Steuern des Berührungsbildschirms, um eine zweite Webseite, die dem zweiten Inhaltsserver zugeordnet ist, in der Liste anzuzeigen, und Fortfahren der Wiedergabe des ersten Medieninhalts, während die zweite Webseite, die dem zweiten Inhaltsserver zugeordnet ist, in der Liste angezeigt wird, und Wiedergeben eines zweiten Medieninhalts, der dem zweiten Inhaltsserver zugeordnet ist, nachdem die Wiedergabe des ersten Medieninhalts in der Liste abgeschlossen ist, und
wenn ein Rundfunkkanal über ein Rundfunknetz mit dem Endgerät (100) verbunden ist, Stoppen einer Ausgabe eines Audios eines Rundfunkprogramms, das über den Rundfunkkanal bereitgestellt wird, und Ausgeben eines Videos des Rundfunkprogramms, während der erste oder zweite Medieninhalt fortlaufend wiedergegeben wird,
wobei der erste und der zweite Medieninhalt Audio umfassen.

11. Endgerät (100) nach Anspruch 10, wobei der Medieninhalt (414) Daten umfasst, die mindestens einem von einem Audio und einem Video zugeordnet sind.

12. Endgerät (100) nach Anspruch 10 oder 11, wobei die Sende/Empfangseinheit (120) eingerichtet ist zum Zugreifen auf den Inhaltsserver (413) unter Verwendung einer Adressinformation des Inhaltsservers (413).

13. Endgerät (100) nach einem der Ansprüche 10 bis 12, wobei die Steuerung (140) eingerichtet ist, um mindestens eine von einer Wiedergabesequenz, einer Wiedergabefrequenz, einer Wiedergabegeschwindigkeit und einer Wiedergabedauer von mindestens einem Medieninhalt (z. B. 414), die dem Inhaltsserver (413) zugeordnet ist, festzulegen.

14. Endgerät (100) nach einem der Ansprüche 10 bis 13, wobei die Steuerung (140), wenn auf eine Mehrzahl von Inhaltsservern (413) zugegriffen wird, eingerichtet ist zum:
Wiedergeben des mindestens einen Medieninhalts (414), der dem Inhaltsserver (413), auf den zuerst zugegriffen wird, zugeordnet ist,
Wiedergeben des mindestens einen Medieninhalts (414), der dem Inhaltsserver (413) zugeordnet ist, der gerade aktiviert wird, oder
Wiedergeben aller Medieninhalte (414), die der Mehrzahl von Inhaltsservern (413) zugeordnet sind, in der Reihenfolge des Zugriffs.

15. Endgerät nach einem der Ansprüche 10 bis 13, wobei die Steuerung (140), wenn der Inhaltsserver (413), auf den zugegriffen wird, durch die Sende/Empfangseinheit (120) von einem ersten Inhaltsserver zu einem zweiten Inhaltsserver geändert wird, eingerichtet ist, um die Wiedergabe des mindestens einen Medieninhalts (414), der dem ersten Inhaltsserver zugeordnet ist, zu stoppen und um den mindestens einen Medieninhalt (414), der dem zweiten Inhaltsserver zugeordnet ist, wiederzugeben.

16. Endgerät nach einem der Ansprüche 10 bis 13, wobei die Steuerung (140) eingerichtet ist, um den mindestens einen Medieninhalt (414), der einem ersten Inhaltsserver zugeordnet ist, fortlaufend wiederzugeben, wenn der Inhaltsserver (413), auf den zugegriffen wird, vom ersten Inhaltsserver zu einem zweiten Inhaltsserver, dem der Medieninhalt nicht zugeordnet ist, geändert wird.

17. Endgerät nach einem der Ansprüche 10 bis 16, ferner umfassend:
eine Eingabeeinheit (110), die eingerichtet ist zum Empfangen eines Auswahlsignals einer Wiedergabeart des mindestens einen Medieninhalts (414), der dem Inhaltsserver (413), auf den zugegriffen wird, zugeordnet ist,
wobei die Steuerung (140) eingerichtet ist zum Steuern eines Wiedergabevorgangs des mindestens einen Medieninhalts (414), der dem Inhaltsserver (413), auf den zugegriffen wird, zugeordnet ist, gemäß dem Auswahlsignal.

18. Endgerät nach einem der Ansprüche 10 bis 17, wobei die Steuerung (140), wenn ein Audio, das von dem Inhaltsserver (413), auf den zugegriffen wird, bereitgestellt wird, vorhanden ist, eingerichtet ist zum Steuern eines von dem bereitgestellten Audio und einem Audio des mindestens einen auszugebenen Medieninhalts (414), der dem Inhaltsserver (413), auf den zugegriffen wird, zugeordnet ist.

19. Endgerät nach einem der Ansprüche 10 bis 17, wobei die Steuerung (140), wenn ein Anruf mit dem Endgerät (100) verbunden ist, eingerichtet ist zum Steuern eines von einem Audio durch die Anrufverbindung und einem Audio des mindestens einen auszugebenen Medieninhalts (414), der dem Inhaltsserver (413), auf den zugegriffen wird, zugeordnet ist.

20. Endgerät nach einem der Ansprüche 10 bis 17, wobei die Steuerung (140), wenn auf den Inhaltsserver (413) zugegriffen wird, während der Medieninhalt (414), der in der Speichereinheit (130) zugeordnet ist, wiedergegeben wird, eingerichtet ist zum Steuern eines von einem Audio des wiedergegebenen Medieninhalts (414) und einem Audio des mindestens einen auszugebenen Medieninhalts (414), der dem Inhaltsserver (413), auf den zugegriffen wird, zugeordnet ist.

21. Endgerät nach einem der Ansprüche 10 bis 20, wobei die Steuerung (140) eingerichtet ist zum Blockieren einer Ausgabe von anderen Medieninhalten, während der mindestens eine Medieninhalt (414), der dem Inhaltsserver (413), auf den zugegriffen wird, zugeordnet ist, wiedergegeben wird.

## Revendications

1. Procédé de reproduction de contenu multimédia dans un terminal (100), le procédé exécuté par le terminal comprenant les étapes consistant à :
mettre en mémoire une pluralité de contenus multimédia dans le terminal (100) ;
attribuer la pluralité de contenus multimédia mis en mémoire à associer à une pluralité de serveurs de contenu (413) ;
accéder à un premier serveur de contenu de la pluralité de serveurs de contenu (413) ;
afficher, par l'intermédiaire d'un écran tactile du terminal, une première page Web associée au premier serveur de contenu ;
attribuer un premier contenu multimédia associé au premier serveur de contenu à une liste affichée sur l'écran tactile du terminal ;
reproduire, en réponse à l'accès au premier serveur de contenu, le premier contenu multimédia associé au premier serveur de contenu attribué à la liste ;
accéder à un seconde serveur de contenu de la pluralité des serveurs de contenu ;
afficher, par l'intermédiaire de l'écran tactile, une seconde page Web associée au second serveur de contenu pendant la reproduction du premier contenu multimédia dans la liste ;
attribuer un second contenu multimédia associé au second serveur de contenu à la liste affichée sur l'écran tactile du terminal ;
reproduire le second contenu multimédia dans la liste après l'achèvement de la reproduction du premier contenu multimédia pendant l'affichage de la seconde page Web associé au seconde serveur de contenu ; et
si un canal de diffusion est connecté au terminal (100) par un réseau de diffusion, arrêter une sortie audio du programme de diffusion fourni par l'intermédiaire du canal de diffusion et produire une vidéo du programme de diffusion tandis que le premier ou le second contenu multimédia est en cours de reproduction,
les premier et second contenus multimédia comprenant une audio.

2. Procédé selon la revendication 1, le terminal (100) dans l'étape d'attribution définissant une séquence de reproduction et/ou une fréquence de reproduction et/ou une vitesse de reproduction et/ou une durée de reproduction dudit contenu multimédia (414) associé au serveur de contenu (413).

3. Procédé selon la revendication 1 ou 2, si l'audio délivrée par le serveur de contenu accessible (413) est présente, le terminal (100) dans l'étape d'attribution configurant l'audio délivrée et/ou l'audio dudit contenu multimédia (414) associé au serveur de contenu accessible (413) à délivrer.

4. Procédé selon la revendication 1 ou 2, si un appel est connecté au terminal (100), le terminal (100) dans l'étape d'attribution configurant l'audio par la connexion d'appel et/ou l'audio dudit contenu multimédia (414) associé au serveur de contenu accessible (413) à délivrer.

5. Procédé selon la revendication 1 ou 2, si l'au moins un serveur de contenu (413) est accessible tandis qu'un contenu multimédia (414) mémorisé dans le terminal (100) est reproduit, le terminal (100) dans l'étape d'attribution configurant l'audio du contenu multimédia reproduite et/ou l'audio dudit contenu multimédia (414) associé au serveur de contenu accessible (413) à délivrer.

6. Procédé selon l'une quelconque des revendications 1 à 5, le terminal (100) dans l'étape de reproduction reproduisant ledit contenu multimédia (414) associé au serveur de contenu (413) qui est en train d'être activé, si une pluralité de serveurs de contenu (413) sont accessibles.

7. Procédé selon l'une quelconque des revendications 1 à 5, l'étape de reproduction consistant à :
arrêter la reproduction d'un contenu multimédia (414) associé au premier serveur de contenu (413) si le serveur de contenu accessible (413) passe du premier serveur de contenu au second serveur de contenu ; et
reproduire ledit contenu multimédia (414) associé au second serveur de contenu.

8. Procédé selon l'une quelconque des revendications 1 à 7, consistant à :
commander une opération de reproduction dudit contenu multimédia (414) associé au serveur de contenu accessible (413),
le terminal (100) dans l'étape de reproduction reproduisant ledit contenu multimédia (414) associé au serveur de contenu accessible (413) selon le résultat de commande.

9. Procédé selon l'une quelconque des revendications 1 à 8, consistant en outre à :
bloquer la sortie d'un autre contenu multimédia tandis que ledit contenu multimédia (414) associé au serveur de contenu accessible (413) est reproduit.

10. Terminal (10) ayant une fonction de reproduction de contenu multimédia, le terminal (100) comprenant :
un écran tactile ;
une unité de mémoire (130) conçue pour mettre en mémoire une pluralité de contenus multimédia ; une unité de transmission/réception (120) conçue pour accéder à au moins un serveur de contenu (413) et pour recevoir au moins un contenu en provenant dudit serveur de contenu accessible ; et
un organe de commande conçu pour :
attribuer la pluralité de contenus multimédia mis en mémoire dans l'unité de mémoire à associer à la pluralité de serveurs de contenu (413),
en réponse à l'accès au premier serveur de contenu de la pluralité des serveurs de contenu (413), ordonner à l'écran tactile d'afficher une première page Web associée au premier serveur de contenu dans une liste et reproduire un premier contenu multimédia associé au premier serveur de contenu dans la liste,
si l'unité de transmission/réception accède au second serveur de contenu de la pluralité de serveurs de contenu (413) pendant la reproduction du premier contenu multimédia, ordonner à l'écran tactile d'afficher une seconde page Web associée au second serveur de contenu dans la liste, à poursuivre la reproduction du premier contenu multimédia pendant l'affichage de la seconde page Web associée au second serveur de contenu dans la liste, et à reproduire un second contenu multimédia associé au second serveur de contenu après l'achèvement de la reproduction du premier contenu multimédia dans la liste, et
si un canal de diffusion est connecté au terminal (100) par l'intermédiaire d'un réseau de diffusion, arrêter une sortie d'audio d'un programme de diffusion délivré par l'intermédiaire du canal de diffusion et produire la vidéo du programme de diffusion, pendant que le premier ou le second contenu multimédia est en cours de reproduction,
les premier et second contenus multimédia comprenant une audio.

11. Terminal (100) selon la revendication 10, le contenu multimédia (414) comprenant des données associées à au moins l'audio et la vidéo.

12. Terminal (100) selon les revendications 10 ou 11, l'unité de transmission/réception (120) étant conçue pour accéder au serveur de contenu (413) à l'aide des informations d'adresse du serveur de contenu (413).

13. Terminal (100) selon les revendications 10 à 12, l'organe de commande (140) étant conçu pour définir une séquence de reproduction et/ou une fréquence de reproduction et/ou une vitesse de reproduction et/ou une durée de reproduction d'au moins un contenu multimédia (par exemple, 414) associé au serveur de contenu (413).

14. Terminal (100) selon l'une quelconque des revendications 10 à 13, l'organe de commande (140), lorsqu'une pluralité de serveurs de contenu (413) sont accessibles, étant conçu pour :
reproduire ledit contenu multimédia (414) associé au serveur de contenu (413) qui est le premier accessible,
reproduire ledit contenu multimédia (414) associé au serveur de contenu (413) qui est actuellement activé, ou
reproduire tous les contenus multimédia (414) associés à la pluralité de serveurs de contenu (413) dans l'ordre d'accès.

15. Terminal selon l'une quelconque des revendications 10 à 13, l'organe de commande (140), lorsque le serveur de contenu (413) accessible passe du premier serveur de contenu au second serveur de contenu par l'intermédiaire de l'unité de transmission/réception (120), étant conçu pour arrêter la reproduction dudit contenu multimédia (414) associé au premier serveur de contenu, et pour reproduire ledit contenu multimédia (414) associé au second serveur de contenu.

16. Terminal selon l'une quelconque des revendications 10 à 13, l'organe de commande (140) étant conçu pour reproduire en continu ledit contenu multimédia (414) associé à un premier serveur de contenu si le serveur de contenu accessible (413) passe du premier serveur de contenu au second serveur de contenu auquel le contenu multimédia est associé.

17. Terminal selon l'une quelconque des revendications 10 à 16, comprenant en outre :
une unité d'entrée (110) conçue pour recevoir un signal de sélection d'une manière de reproduction dudit contenu multimédia (414) associé au serveur de contenu accessible (413),
l'organe de commande (140) étant conçu pour commander une opération de reproduction dudit contenu multimédia (414) associé au serveur de contenu accessible (413) selon le signal de sélection.

18. Terminal selon l'une quelconque des revendications 10 à 17, l'organe de commande (140), lorsque l'audio délivrée par le serveur de contenu accessible (413) est présente, étant conçu pour commander l'audio délivrée et/ou l'audio dudit contenu multimédia (414) associé au serveur de contenu accessible (413) à délivrer.

19. Terminal selon l'une quelconque des revendications 10 à 17, l'organe de commande (140) étant conçu pour, lorsqu'un appel est connecté au terminal (100), commander l'audio par la connexion d'appel et/ou l'audio dudit contenu multimédia (414) associé au serveur de contenu (413) à délivrer.

20. Terminal selon l'une quelconque des revendications 10 à 17, l'organe de commande (140) étant conçu pour, si le serveur de contenu (413) est accessible pendant que le contenu multimédia (414) associé dans l'unité de mémoire (130) est reproduit, commander l'audio du contenu multimédia reproduit (414) et l'audio dudit contenu multimédia (414) associé au serveur de contenu accessible (413) à délivrer.

21. Terminal selon l'une quelconque des revendications 10 à 20, l'organe de commande (140) étant conçu pour bloquer la sortie d'un autre contenu multimédia pendant que ledit contenu multimédia (414) associé au serveur de contenu accessible (413) est reproduit.
